# FASCICULE DE BREVET EUROPEEN

(11) **EP 2 759 758 B1**
(45) Date de publication et mention de la délivrance du brevet: **09.12.2020**
(21) Numéro de dépôt: 14150868.9
(22) Date de dépôt: 13.01.2014
(51) Int. Cl.: F17C 3/04, F17C 13/08

(54) **Réservoir cryogénique**
Kryogen Behälter
Cryogenic vessel

(30) Priorité: 23.01.2013 FR 1350572
(43) Date de publication de la demande: 30.07.2014
(73) Titulaire: Cryolor, 57365 Ennery (FR)
(72) Inventeur: Varassi, Lucien, 57890 Porcelette (FR)
(74) Mandataire: Air Liquide

(56) Documents cités:
- WO-A2-2012/143740
- DE-A1-102005 051 691
- FR-A1- 2 780 767
- FR-A1- 2 967 130
- US-A- 5 368 184
- US-A1- 2005 183 425

## Description

La présente invention concerne un réservoir de stockage pour le transport de fluide cryogénique.

L'invention concerne plus particulièrement un réservoir de stockage à double parois pour le transport d'un fluide cryogénique comprenant une paroi intérieure délimitant un volume de stockage pour du fluide, une paroi extérieure et un vide dans l'espace inter parois entre les parois intérieure et extérieure, dans lequel la paroi extérieure comprend une structure multicouche.

Le transport de grandes quantités de fluides cryogéniques (azote, oxygène, argon, gaz naturel liquéfié, éthylène, hydrogène, ...) utilise généralement des véhicules de type semi-remorque comprenant un réservoir cryogénique à double parois avec un vide au niveau de l'inter-paroi.

Par exemple, la pression, c'est-à-dire le niveau de vide entre des parois intérieure et extérieure est de l'ordre de 5 x 10⁻⁴ mbar.

Un tel réservoir doit posséder une étanchéité suffisante, par exemple un taux de fuite inférieur à 5 x 10⁻⁷ mbar litre/seconde lors d'un test avec de l'hélium.

Ces réservoirs sont généralement constitués d'acier inoxydable pour ce qui concerne la paroi intérieure et d'acier au carbone ou d'acier inoxydable pour la paroi extérieure.

Dans d'autres configurations, la paroi intérieure est en aluminium tandis que la paroi extérieure est en aluminium.

Dans encore une autre configuration, la paroi intérieure est en acier inoxydable tandis que la paroi extérieure est en aluminium.

Une couche d'isolant thermique et/ou de la perlite est généralement disposée dans l'espace inter-parois entre les parois intérieure et extérieure.

Dans d'autres configurations (cf. par exemple US5533340, DE102005051691A1, FR2967130A ou EP090334), ces réservoirs ont une structure composite multicouche.

Ces exemples de structures composites connues sont cependant peu satisfaisantes en terme d'étanchéité et/ou de résistance mécanique et/ou d'isolation thermique.

Un but de la présente invention est de pallier tout ou partie des inconvénients de l'art antérieur relevés ci-dessus.

A cette fin, le réservoir selon l'invention, défini par la revendication 1, et par ailleurs conforme à la définition générique qu'en donne le préambule ci-dessus, est essentiellement caractérisé en ce que la paroi extérieure comprend, de l'intérieur du réservoir vers l'extérieur du réservoir: une première couche étanche comprenant un film ou tissu métallisé ou une cloison d'aluminium, une seconde couche comprenant une épaisseur de matériau stratifié à base de fibres de carbones et/ou de fibres de verre, une troisième couche comprenant une épaisseur d'isolation thermique de type mousse de polyuréthane et/ou du bois balsa, une quatrième couche comprenant une épaisseur de matériau stratifié à base de fibres de carbones et/ou de fibres de verre, la première couche ayant une épaisseur comprise entre 0,1mm et 1mm, la seconde couche ayant une épaisseur comprise entre 1 et 10 mm, la troisième couche ayant une épaisseur comprise entre 10 et 80 mm, la quatrième couche ayant une épaisseur comprise entre 1 et 10mm, et le réservoir a une forme générale cylindrique et comprend une pluralité de pieds supports qui s'étendent sur une partie de la circonférence du réservoir pour former des éléments de maintien et de fixation du réservoir en position horizontale.

Par ailleurs, des modes de réalisation de l'invention peuvent comporter l'une ou plusieurs des caractéristiques suivantes :
- au moins l'une parmi : la seconde couche et la quatrième couche, comprend des fibres de carbone ou des fibres de verre stratifiées au moyen d'une résine de type époxy ou polyamide,
- la troisième couche comprend une mousse isolante du type polyuréthane,
- la première couche a une épaisseur comprise entre 0,1mm et 1mm, la seconde couche a une épaisseur comprise entre deux et huit millimètres, la troisième couche a une épaisseur comprise entre vingt et soixante millimètres, la quatrième couche a une épaisseur comprise entre deux et huit millimètres,
- la paroi intérieure comprend une structure multicouche comprenant, de l'intérieur du réservoir vers l'extérieur du réservoir: une première couche étanche comprenant une épaisseur de plastique, une seconde couche de renforcement de fibres de carbone et/ou de fibres de verre noyées dans de la résine, la première couche de la paroi intérieure ayant une épaisseur comprise entre 0,5mm et 5mm,
- la paroi intérieure comprend une structure multicouche comprenant, de l'intérieur du réservoir vers l'extérieur du réservoir : une première couche étanche comprenant une épaisseur de d'aluminium, une seconde couche de renforcement de fibres de carbone et/ou de fibres de verre noyées dans de la résine,
- la paroi intérieure comprend une troisième couche disposée sur la seconde couche, du côté extérieur du réservoir, la troisième couche comprenant une couche métallique telle qu'un film ou tissu recouvert d'aluminium ou de métal,
- les pieds supports sont disposés autour de la paroi extérieure, un enroulement filamentaire étant réalisé autour de la paroi extérieure munie des pieds supports,
- le réservoir comprend, dans le volume intérieur délimité par la paroi interne, au moins une cloison transversale à un axe longitudinal du réservoir, la au moins une cloison étant ajourée pour à la fois autoriser un flot de liquide dans le réservoir selon une direction parallèle à l'axe longitudinal et former un brise-flot,
- la au moins une cloison transversale est fixée sur un tronçon tubulaire formant une partie centrale de la paroi interne du réservoir,
- la au moins une cloison transversale est montée serrée entre deux tronçons tubulaires assemblés l'un à l'autre pour former une partie centrale de la paroi interne du réservoir,
- les deux extrémités de la partie centrale du réservoir sont refermées par des parois de fond fixées aux extrémités de la partie centrale de la paroi interne du réservoir,
- la paroi intérieure comporte au moins un élément de renfort mécanique disposé sur sa surface extérieure au niveau de l'emplacement de la au moins une cloison transversale,
- un enroulement de fibre de renfort est enroulé sur la partie centrale et les parois de fond assemblées aux deux extrémités de la partie centrale,
- l'espace inter-parois comprend un isolant thermique tel que l'un au moins parmi : de la perlite, un isolant thermique de type mousse ou multicouche,
- les parois intérieure et extérieure sont séparées par des organes de support,
- le réservoir comprend des organes d'espacement rigides disposés entre les parois intérieure et extérieure, les organes d'espacement ayant deux extrémités reliées respectivement aux deux parois et assurent un écartement compris entre 10mm et 100mm,
- les tronçons et les parois de fond sont constitués de plastique, les parois de fond étant thermosoudées sur les deux extrémités de la partie centrale formée par le ou les tronçons,
- les tronçons et les parois de fond sont constitués d'un même métal ou d'aluminium, les parois de fond étant soudées sur les deux extrémités de la partie centrale formée par le ou les tronçons soudés,
- la au moins une cloison transversale est constituée du même matériau que les tronçons et parois de fond (acier inoxydable, aluminium ou inox par exemple), la au moins une cloison transversale étant soudée sur un tronçon,
- les pieds supports sont constitués de l'un au moins des matériaux suivants : du bois balsa, un acier inoxydable, de l'aluminium, de l'inox, un plastique,
- le au moins un élément de renfort mécanique disposé sur sa surface extérieure du réservoir au niveau de l'emplacement de la au moins une cloison transversale comprend au moins l'un parmi : une pièce de renfort en bois balsa.

L'invention peut concerner également tout dispositif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue de côté, schématique et partielle, illustrant un réservoir mobile sur un véhicule de type semi-remorque,
- la figure 2, représente une vue de côté, en coupe verticale schématique et partielle, illustrant un exemple de structure d'un mode de réalisation de réservoir selon l'invention,
- la figure 3 représente en coupe, schématique et partielle, illustrant un exemple de structure de la paroi intérieure selon un mode de réalisation possible de l'invention,
- les figures 4 et 5 représentent des vues en coupe, schématiques et partielles, illustrant respectivement deux exemples possibles de structure de la paroi extérieure d'un réservoir selon l'invention,
- la figure 6 représente une vue en coupe transversale, schématique et partielle, illustrant un exemple de structure de réservoir d'un mode de réalisation possible selon l'invention,
- la figure 7 représente une vue en perspective, schématique et partielle, illustrant un exemple de structure de réservoir selon un mode de réalisation possible de l'invention,
- la figure 8 représente une vue en coupe, schématique et partielle, d'un détail d'un autre mode de réalisation possible de réservoir selon l'invention,
- les figures 9 et 10 illustrent des vues éclatées, de côté et en coupe, illustrant respectivement deux exemples possibles de structures de réservoir selon l'invention.

L'invention concerne un réservoir de stockage pour le transport de fluide cryogénique et plus précisément un réservoir apte à stocker un mélange liquide-gaz à des températures basses par exemple comprises entre -200°C et -50°C.

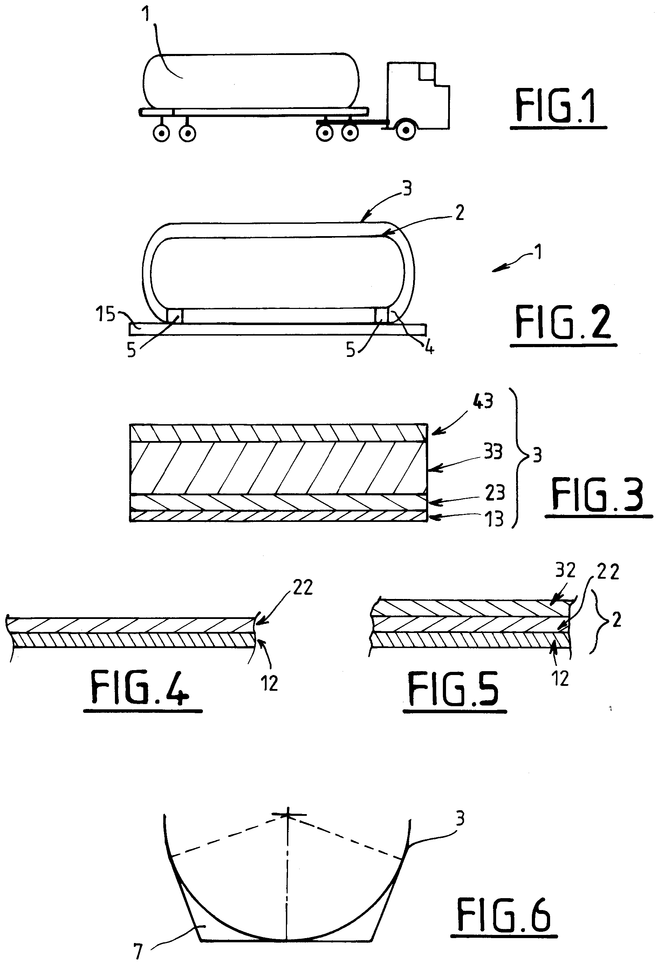

Comme illustré à la figure 1, et sans que ceci soit limitatif, un tel réservoir 1 peut être monté de façon amovible ou non sur la remorque d'un véhicule tel qu'un camion.

Le réservoir 1 est du type à double parois 2, 3, c'est-à-dire comprend une paroi 2 intérieure délimitant un volume de stockage pour du fluide, une paroi 3 extérieure et espace 4 étanche entre ces deux parois 2, 3 dans lequel est formé un vide (cf. figure 2). L'espace 4 inter-parois 2, 3 peut avoir une épaisseur comprise entre 30 et 100mm par exemple et peut être soumis à un vide dont la pression est comprise entre 10⁻⁴ mbar et 10⁻⁵ mbar.

L'espace 4 inter-parois comprend de préférence un isolant thermique tel que l'un au moins parmi : de la perlite, un isolant thermique de type mousse ou multicouche.

Comme illustré schématiquement à la figure 3, les parois intérieure 2 et extérieure 3 peuvent être classiquement séparées par des organes 5 de support. Bien entendu, tout autre type d'architecture maintenant la paroi intérieure 5 à l'intérieur du volume délimité par la paroi 3 extérieure peut être envisagée.

Comme illustré à la figure 3, la paroi 3 extérieure comprend une structure multicouche comprenant, de l'intérieur du réservoir vers l'extérieur du réservoir :
- une première couche 13 étanche comprenant un film ou un tissu métallisé ou une cloison d'aluminium,
- une seconde couche 23 comprenant une épaisseur de matériau stratifié à base de fibres de carbones et/ou de fibres de verre,
- une troisième couche 33 comprenant une épaisseur d'isolation thermique de type mousse de polyuréthane et/ou du bois balsa ou tout autre matériau équivalent approprié par exemple un couche comprenant une « âme sandwich »,
- une quatrième couche 43 comprenant une épaisseur de matériau stratifié à base de fibres de carbones et/ou de fibres de verre.

La quatrième couche peut comprendre notamment l'un parmi :
du polystyrène expansé (PSE), du polystyrène extrudé (PSX), du polyuréthane (PUR) de la laine minérale, de la laine animale, des fibres de bois, des fibres de chanvre, de la laine de coton, du lin, de la laine de mouton, des plumes de canard, de l'ouate de cellulose, du liège expansé, de la perlite, du vermiculite expansé, du verre cellulaire, au moins un panneau isolant sous vide, le au moins un panneau étant constitués d'un aérogel enveloppé dans un film étanche mis sous vide, l'aérogel pouvant être du type "silice nanostructurée".

La première couche 13 a une épaisseur comprise de préférence entre 0.1mm et 2mm. La seconde couche 23 a une épaisseur comprise de préférence entre 1 et 10 mm. La troisième couche 33 a une épaisseur comprise entre 10 et 80 mm. La quatrième couche 43 a une épaisseur comprise de préférence entre 1 et 10 mm.

Par exemple, la première couche 13 a une épaisseur comprise entre 0,8 et 1,2mm, par exemple égale à 1mm. La seconde couche 23 a une épaisseur comprise de préférence entre 2 et 6 mm, par exemple égale à 4mm. La troisième couche 33 a une épaisseur comprise entre 30 et 50 mm et par exemple égale à 40mm. La quatrième couche 43 a une épaisseur comprise a une épaisseur comprise de préférence entre 2 et 6 mm, par exemple égale à 4mm.

Cette structure composite de la paroi 3 extérieur permet une isolation thermique satisfaisante, une bonne étanchéité pour maintenir le vide dans l'espace 4 inter-parois de tout en garantissant une bonne résistance mécanique à l'ensemble et une masse relativement basse.

En particulier, la première couche 13 participe au maintien du niveau de vide dans l'espace 4 interparois. De préférence, cette première couche 13 présent une étanchéité au test connu à l'hélium de 5 x 10⁻⁷ mbar litre/secondes (taux de fuite maximum).

De plus, cette structure multicouches (type sandwich avec deux couches de stratifiés 23 de part et d'autre de la couche 33 de mousse ou de balsa permet de conférer à l'ensemble une raideur déterminée et une résistance au flambage et aux efforts dynamiques.

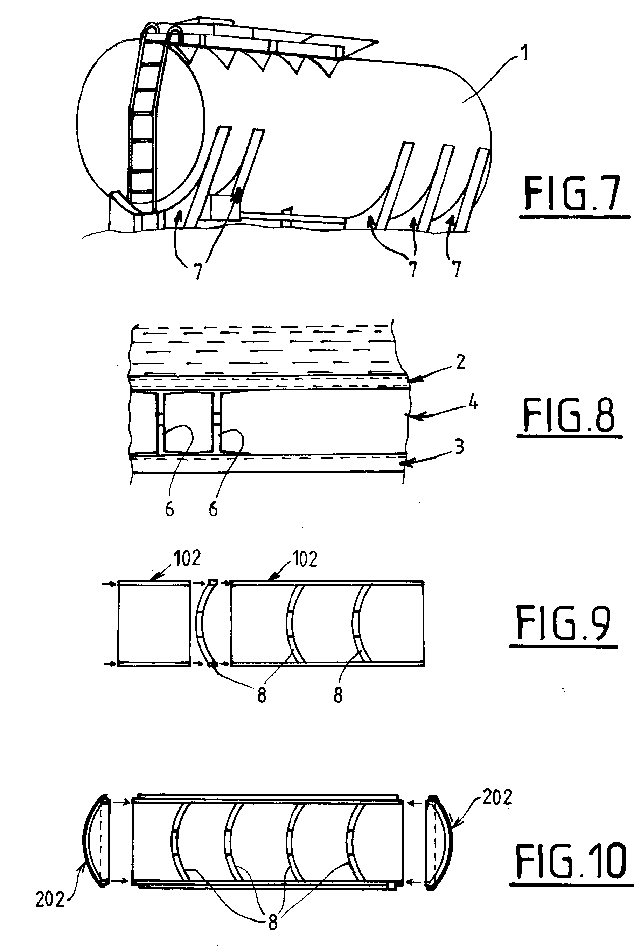

Dans un premier mode de réalisation possible représentée schématiquement à la figure 8, la structure du réservoir 1 peut être composée de deux parois intérieure 2 et extérieure 3 solidarisées entre elles (formant ainsi une seule entité physique). Selon cette solution, les deux parois intérieure 2 et extérieure 3 sont en matériaux composite et sont reliés par des organes 6 d'espacement tels que des entretoises ménageant un espace 4 inter-parois de l'ordre de 60mm par exemple et sous vide.

Dans un autre mode de réalisation possible les deux parois intérieure 2 et extérieure 3 forment des contenants distincts indépendants (deux entités physiques distinctes). Par exemple, les deux parois intérieure 2 et extérieure 3 sont en matériau composite et sont séparées et maintenues l'une par rapport à l'autre via des organes de support distincts (par exemple avec des organes de renfort en matériau composite).

Comme illustré schématiquement à la figure 4, la paroi intérieure 2 peut être composée d'une structure composite multicouches comprenant une enveloppe 12 en plastique formant un liner délimitant le volume de stockage pour le fluide cryogénique. Cette première couche 12 en plastique est étanche et a une épaisseur comprise par exemple entre 1 et 5 millimètres. Sur la surface extérieure de cette première couche 12 est stratifiée une seconde couche 22 de matériau composite (fibres+résine) pour former un renfort de tenue à la pression interne.

De préférence le volume intérieur délimité par la première couche 12 de la paroi 2 intérieure comprend des cloisons 8 transversales ajourées en leur centre pour former des brises flots (ouvertures centrales de diamètre de l'ordre de 100mm à 800mm par exemple).

Comme illustré à la figure 9, cette première couche 12 peut être constituée de plusieurs tronçons cylindriques 102 assemblés en série, les cloisons 8 transversales ajourées formant des brises flots étant intercalées et encastrés entre deux tronçons cylindriques 102 adjacents.

Une fois cette partie centrale cylindrique assemblée, celle-ci peut être enroulée de matériau composite de renforcement (deuxième couche 22 de fibres + résine). Après enroulement, cette partie cylindrique peut être refermée à ses extrémités par des fonds 202 respectifs par exemple pré-moulés et recouverts également de cette deuxième couche (les fonds ont la même structure multicouches que la partie cylindrique centrale, cf. figure 10). Les fonds 202 peuvent être assemblés à la partie centrale via un enroulement local supplémentaire de cette deuxième couche (résine + fibres). Cet enroulement local complémentaire circonférentiel de recouvrement peut être sur une zone longitudinale de 100 à 200 mm de large par exemple.

Selon un autre mode de réalisation possible, les deux fonds 202 thermoformés sont du même matériau que la première couche 12 de la partie centrale et l'enroulement est réalisé sur l'ensemble (partie centrale + fonds 202). Cet enroulement de la seconde couche 22 ne peut en principe pas être réalisé jusqu'à l'axe de la structure (du fait de l'outil de maintien aux extrémités). Si besoin une finition par stratification manuelle peut être réalisée si nécessaire après enroulement jusqu'au au plus près de l'axe (jusqu'à un diamètre de 300 mm par exemple).

Le réservoir 1 est de préférence renforcé au niveau des portions comprenant les cloisons 8 transversales. Par exemple des renforts en bois balsa peuvent être prévus localement autour de la partie cylindrique afin de renforcer localement la le réservoir pour supporter les contraintes locales dynamiques qui se répercutent à l'interface (par exemple une masse de liquide en pression contre les brises-flots sous 2g de déplacement de liquide vers l'avant).

Dans encore une autre variante de réalisation possible, la première couche 12 de la paroi intérieure 2 est constituée d'aluminium de même que les cloisons 8 brise-flot. Une seconde couche 22 composite est formée sur la surface extérieure de la première couche 12 et une troisième couche 32 de type métallique est formée sur la seconde couche (cf. figure 5).

Cette solution peut être réalisée en fabriquant par chaudronnerie un sous-ensemble comportant les cloisons 8 en aluminium (de l'épaisseur requise pour résister aux effets dynamiques du gaz liquéfié), la partie centrale cylindrique (virole) en aluminium et les fonds 202 en aluminium. Cette épaisseur minimale d'aluminium peut être soudée par des procédés de soudage connus du type TIG ou MIG/MAG à condition d'utiliser des outils de maintien adaptés.

L'ensemble ainsi soudé peut ensuite être recouvrir de la seconde couche 22 enroulement filamentaire.

Pour cela, les deux fonds 202 pré-moulés peuvent être assemblés et soudés à la partie centrale en aluminium et l'ensemble peut être recouvert de la seconde couche 22 (fibres +résine) par stratification d'assemblage. En variante, un enroulement global intégrant les fonds 202 peut être réalisé jusqu'çà un diamètre déterminé, par exemple 300mm, puis l'ensemble subit une stratification complémentaire de finition au niveau des fonds 202.

Enfin, la surface extérieure de la seconde couche 22 subit un surfaçage extérieur avec une couche métallique (une métallisation ou le dépôt d'un tissu aluminisé ou d'un feuillard ou un film métallisé).

Ainsi, dans une variante de réalisation, la première couche 12 de la paroi intérieure 2 (ainsi que les fonds 202 et cloisons 8) peuvent être en aluminium

Dans une autre solution possible, cette première couche (partie cylindrique, cloisons 8) est entièrement en inox.

Cette paroi 3 extérieure peut ainsi résister aux sollicitations suivantes :
- le vide de l'inter-paroi 4,
- la masse du réservoir plein avec les effets dynamiques,
- les liaisons du réservoir avec l'extérieur (par exemple un train roulant, une béquille et une plaque d'attelage).

Comme illustré aux figures 6 et 7, le réservoir 1 a de préférence une forme générale cylindrique et comprend une pluralité de pieds 7 supports qui s'étendent sur une partie de la circonférence du réservoir 1 pour former des éléments de maintien et de fixation du réservoir 1 en position horizontale.

Ces supports 7 sont disposés de préférence autour de la paroi 3 extérieure et l'enroulement filamentaire peut être réalisé autour de la paroi 3 extérieure munie des pieds 7 supports. Ces supports 7 forment également des renforts structuraux.

## Revendications

1. Réservoir de stockage à double parois (2, 3) pour le transport d'un fluide cryogénique comprenant une paroi (2) intérieure délimitant un volume de stockage pour du fluide, une paroi (3) extérieure et un vide dans l'espace inter parois entre les parois intérieure (2) et extérieure (3), dans lequel la paroi (3) extérieure comprend une structure multicouche comprenant, de l'intérieur du réservoir (1) vers l'extérieur du réservoir (1): une première couche (13) étanche comprenant un film ou tissu métallisé ou une cloison d'aluminium, une seconde couche (23) comprenant une épaisseur de matériau stratifié à base de fibres de carbones et/ou de fibres de verre, une troisième couche (33) comprenant une épaisseur d'isolation thermique, une quatrième couche (43) comprenant une épaisseur de matériau stratifié à base de fibres de carbones et/ou de fibres de verre, la première couche (13) ayant une épaisseur comprise entre 0,1mm et 1mm, la seconde couche (23) ayant une épaisseur comprise entre 1 et 10 mm, la troisième couche (33) ayant une épaisseur comprise entre 10 et 80 mm, la quatrième couche (43) ayant une épaisseur comprise entre 1 et 10mm, le réservoir (1) ayant une forme générale cylindrique et comprend une pluralité de pieds (7) supports qui s'étendent sur une partie de la circonférence du réservoir (1) pour former des éléments de maintien et de fixation du réservoir (1) en position horizontale .

2. Réservoir selon la revendication 1, **caractérisé en ce que**, au moins l'une parmi : la seconde couche (23) et la quatrième couche (43), comprend des fibres de carbone ou des fibres de verre stratifiées au moyen d'une résine de type époxy ou polyamide.

3. Réservoir selon la revendication 1 ou 2, **caractérisé en ce que** la troisième couche (33) comprend au moins l'un parmi : une mousse de polyuréthane notamment une mousse isolante du type polyuréthane, du bois balsa, une couche comprenant une âme sandwich, du polystyrène expansé (PSE), du polystyrène extrudé (PSX), du polyuréthane (PUR), de la laine minérale, de la laine animale, des fibres de bois, des fibres de chanvre, de la laine de coton, du lin, de la laine de mouton, des plumes de canard, de l'ouate de cellulose, du liège expansé, de la perlite, du vermiculite expansé, du verre cellulaire, au moins un panneau isolant sous vide, le au moins un panneau étant constitué d'un aérogel enveloppé dans un film étanche mis sous vide, l'aérogel pouvant être du type "silice nanostructurée".

4. Réservoir selon l'une quelconque des revendications 1 à 3, **caractérisé en ce que** la première couche (13) a une épaisseur comprise entre 0,1mm et 1mm, la seconde couche (23) a une épaisseur comprise entre deux et huit millimètres, la troisième couche (33) a une épaisseur comprise entre vingt et soixante millimètres, la quatrième couche (43) a une épaisseur comprise entre deux et huit millimètres.

5. Réservoir selon l'une quelconque des revendications 1 à 4, **caractérisé en ce que** la paroi (2) intérieure comprend une structure multicouche comprenant, de l'intérieur du réservoir (1) vers l'extérieur du réservoir (1) : une première couche (12) étanche comprenant une épaisseur de plastique, une seconde couche (22) de renforcement de fibres de carbone et/ou de fibres de verre noyées dans de la résine, la première couche (12) de la paroi intérieure (2) ayant une épaisseur comprise entre 0,5mm et 5mm.

6. Réservoir selon l'une quelconque des revendications 1 à 4, **caractérisé en ce que** la paroi (2) intérieure comprend une structure multicouche comprenant, de l'intérieur du réservoir (1) vers l'extérieur du réservoir (1) : une première couche (12) étanche comprenant une épaisseur de d'aluminium, une seconde couche (22) de renforcement de fibres de carbone et/ou de fibres de verre noyées dans de la résine.

7. Réservoir selon la revendication 5 ou 6, **caractérisé en ce que** la paroi (2) intérieure comprend une troisième couche (33) disposée sur la seconde (22) couche, du côté extérieur du réservoir (1), la troisième couche (33) comprenant une couche métallique tel qu'un film ou tissu recouvert d'aluminium ou de métal.

8. Réservoir selon l'une quelconque des revendications 1 à 7, **caractérisé en ce que** les pieds (7) supports sont disposés autour de la paroi (3) extérieure et **en ce qu'**un enroulement filamentaire est réalisé autour de la paroi (3) extérieure munie des pieds (7) supports.

9. Réservoir selon l'une quelconque des revendications 1 à 8, **caractérisé en ce que** le réservoir (1) comprend, dans le volume intérieur délimité par la paroi (2) interne, au moins une cloison (8) transversale à un axe longitudinal du réservoir (1), la au moins une cloison (8) étant ajourée pour à la fois autoriser un flot de liquide dans le réservoir (1) selon une direction parallèle à l'axe longitudinal et former un brise-flot.

10. Réservoir selon la revendication 9, **caractérisé en ce que** la au moins une cloison (8) transversale est fixée sur un tronçon (102) tubulaire formant une partie centrale de la paroi (2) interne du réservoir (1).

11. Réservoir selon la revendication 9 ou 10, **caractérisé en ce que** la au moins une cloison (8) transversale est montée serrée entre deux tronçons tubulaires (102) assemblés l'un à l'autre pour former une partie centrale de la paroi (2) interne du réservoir (1).

12. Réservoir selon la revendication 10 ou 11, **caractérisé en ce que** les deux extrémités de la partie centrale du réservoir sont refermées par des parois de fond (202) fixées aux extrémités de la partie centrale de la paroi (2) interne du réservoir (1).

13. Réservoir selon l'une quelconque des revendications 9 à 12, **caractérisé en ce que** la paroi intérieure (2) comporte au moins un élément de renfort mécanique disposé sur sa surface extérieure au niveau de l'emplacement de la au moins une cloison (8) transversale.

14. Réservoir selon la revendication 12, **caractérisé en ce qu'**un enroulement de fibre de renfort est enroulé sur la partie centrale (102) et les parois de fond (202) assemblés aux deux extrémités de la partie centrale.

## Patentansprüche

1. Doppelwand-Speicherbehälter (2, 3) zum Transport eines kryogenen Fluids, der eine Innenwand (2), die ein Speichervolumen für Fluid begrenzt, eine Außenwand (3) und einen Hohlraum im Zwischenwandraum zwischen der Innenwand (2) und Außenwand (3) umfasst, wobei die Außenwand (3) einen Mehrschichtaufbau umfasst, der von der Innenseite des Behälters (1) zur Außenseite des Behälters (1) Folgendes umfasst: eine erste dichte Schicht (13), die eine metallisierte Folie oder einen metallisierten Stoff umfasst, oder eine Trennwand aus Aluminium, eine zweite Schicht (23), die in einer Stärke ein Schichtmaterial auf Basis von Kohlenstoff- und/oder Glasfasern umfasst, eine dritte Schicht (33), die in einer Stärke eine Wärmedämmung umfasst, eine vierte Schicht (43), die in einer Stärke ein Schichtmaterial auf Basis von Kohlenstoff- und/oder Glasfasern umfasst, wobei die erste Schicht (13) zwischen 0,1 mm und 1 mm stark ist, die zweite Schicht (23) zwischen 1 und 10 mm stark ist, die dritte Schicht (33) zwischen 10 und 80 mm stark ist, die vierte Schicht (43) zwischen 1 und 10 mm stark ist, wobei der Behälter (1) eine im Allgemeinen zylindrische Form aufweist und eine Vielzahl von Stützfüßen (7) umfasst, die sich über einen Abschnitt des Umfangs des Behälters (1) erstrecken, um Elemente zum Halten und Fixieren des Behälters (1) in der horizontalen Position zu bilden.

2. Behälter nach Anspruch 1, **dadurch gekennzeichnet, dass** mindestens eine von der zweiten Schicht (23) und der vierten Schicht (43) Kohlenstoff- oder Glasfasern umfasst, die mithilfe von einem Epoxidharz oder Polyamidharz zu einem Schichtstoff verarbeitet sind.

3. Behälter nach Anspruch 1 oder 2, **dadurch gekennzeichnet, dass** die dritte Schicht (33) mindestens eines aus Folgendem umfasst: einen Polyurethanschaum, insbesondere einen Polyurethan-Dämmschaum, Balsaholz, eine Schicht, die einen Sandwichkern umfasst, expandiertes Polystyrol (EPS), extrudiertes Polystyrol (XPS), Polyurethan (PUR), Mineralwolle, tierische Wolle, Holzfasern, Hanffasern, Baumwolle, Flachs, Schafwolle, Entenfedern, Zellstoffwatte, expandierten Kork, Perlit, Blähglimmer, Schaumglas, mindestens eine evakuierte Dämmplatte, wobei die mindestens eine Platte aus einem Aerogel gebildet ist, das in einer dichten Folie eingewickelt ist, die evakuiert wird, wobei es sich bei dem Aerogel um ein Aerogel vom Typ "nanostrukturiertes Siliziumdioxid" handeln kann.

4. Behälter nach einem der Ansprüche 1 bis 3, **dadurch gekennzeichnet, dass** die erste Schicht (13) eine Stärke zwischen 0,1 mm und 1 mm aufweist, die zweite Schicht (23) eine Stärke zwischen zwei und acht Millimetern aufweist, die dritte Schicht (33) eine Stärke zwischen zwanzig und sechzig Millimetern aufweist, die vierte Schicht (43) eine Stärke zwischen zwei und acht Millimetern aufweist.

5. Behälter nach einem der Ansprüche 1 bis 4, **dadurch gekennzeichnet, dass** die Innenwand (2) einen Mehrschichtaufbau umfasst, der von der Innenseite des Behälters (1) zur Außenseite des Behälters (1) Folgendes umfasst: eine erste dichte Schicht (12), die in einer Stärke Kunststoff umfasst, eine zweite Verstärkungsschicht (22) aus in Harz eingebetteten Kohlenstoff- und/oder Glasfasern, wobei die erste Schicht (12) der Innenwand (2) eine Stärke zwischen 0,5 mm und 5 mm aufweist.

6. Behälter nach einem der Ansprüche 1 bis 4, **dadurch gekennzeichnet, dass** die Innenwand (2) einen Mehrschichtaufbau umfasst, der von der Innenseite des Behälters (1) zur Außenseite des Behälters (1) Folgendes umfasst: eine erste dichte Schicht (12), die in einer Stärke Aluminium umfasst, eine zweite Verstärkungsschicht (22) aus in Harz eingebetteten Kohlenstoff- und/oder Glasfasern.

7. Behälter nach Anspruch 5 oder 6, **dadurch gekennzeichnet, dass** die Innenwand (2) eine dritte Schicht (33) umfasst, die auf der Außenseite des Behälters (1) auf der zweiten Schicht (22) angeordnet ist, wobei die dritte Schicht (33) eine Metallschicht wie eine Folie oder einen Stoff umfasst, die bzw. der mit Aluminium oder Metall überzogen ist.

8. Behälter nach einem der Ansprüche 1 bis 7, **dadurch gekennzeichnet, dass** die Stützfüße (7) um die Außenwand (3) herum angeordnet sind und dadurch, dass um die Außenwand (3) herum, die mit den Stützfüßen (7) versehen ist, eine Faserwicklung vorgesehen ist.

9. Behälter nach einem der Ansprüche 1 bis 8, **dadurch gekennzeichnet, dass** der Behälter (1), im von der Innenwand (2) begrenzten Innenvolumen mindestens eine Trennwand (8) quer zu einer Längsachse des Behälters (1) umfasst, wobei die mindestens eine Trennwand (8) durchbrochen ist, damit gleichzeitig in einer Richtung parallel zur Längsachse ein Flüssigkeitsschwall im Behälter (1) möglich ist und eine Schwallwand gebildet wird.

10. Behälter nach Anspruch 9, **dadurch gekennzeichnet, dass** die mindestens eine quer verlaufende Trennwand (8) an einem röhrenförmigen Teilstück (102) fixiert ist, das einen mittigen Abschnitt der Innenwand (2) des Behälters (1) bildet.

11. Behälter nach Anspruch 9 oder 10, **dadurch gekennzeichnet, dass** die mindestens eine quer verlaufende Trennwand (8) eingespannt zwischen zwei röhrenförmigen Teilstücken (102) montiert ist, die aneinander befestigt sind um einen mittigen Abschnitt der Innenwand (2) des Behälters (1) zu bilden.

12. Behälter nach Anspruch 10 oder 11, **dadurch gekennzeichnet, dass** die beiden Enden des mittigen Abschnitts des Behälters mit Stirnwänden (202) verschlossen sind, die an den Enden des mittigen Abschnitts der Innenwand (2) des Behälters (1) befestigt sind.

13. Behälter nach einem der Ansprüche 9 bis 12, **dadurch gekennzeichnet, dass** die Innenwand (2) mindestens ein mechanisches Verstärkungselement umfasst, das im Bereich der Position der mindestens einen quer verlaufenden Trennwand (8) an ihrer Außenfläche angeordnet ist.

14. Behälter nach Anspruch 12, **dadurch gekennzeichnet, dass** der mittige Abschnitt (102) und die Stirnwände (202), die an den beiden Enden des mittigen Abschnitts montiert sind, mit einer Faserverstärkung umwickelt sind.

## Claims

1. Two-walled storage tank (2, 3) for the transport of a cryogenic fluid comprising an inner wall (2) delimiting a storage volume for fluid, an outer wall (3) and a vacuum in the inter-wall space between the inner (2) and outer (3) walls, wherein the outer wall (3) comprises a multilayer structure comprising, from the inside of the tank (1) to the outside of the tank (1): a first impervious layer (13) comprising a metallised film or fabric or an aluminium partition, a second layer (23) comprising a thickness of carbon fibre- and/or glass fibre-based stratified material, a third layer (33) comprising a thickness of thermal insulation, a fourth layer (43) comprising a thickness of carbon fibre- and/or glass fibre-based stratified material, the first layer (13) having a thickness comprised between 0.1mm and 1mm, the second layer (23) having a thickness comprised between 1 and 10mm, the third layer (33) having a thickness comprised between 10 and 80mm, the fourth layer (43) having a thickness comprised between 1 and 10mm, the tank (1) having a general cylindrical shape and comprises a plurality of support feet (7) which extend over a portion of the circumference of the tank (1) to form elements holding and fixing the tank (1) in the horizontal position.

2. Tank according to claim 1, **characterised in that**, at least one from among: the second layer (23) and the fourth layer (43), comprises carbon fibres or glass fibres stratified by means of an epoxy- or polyamide-type resin.

3. Tank according to claim 1 or 2, **characterised in that** the third layer (33) comprises at least one from among: a polyurethane foam in particular an insulating foam of the polyurethane type, balsa wood, a layer comprising a sandwich core, expanded polystyrene (PSE), extruded polystyrene (PSX), polyurethane (PUR), mineral wool, animal wool, wood fibres, hemp fibres, cotton wool, flax, sheep's wool, duck feathers, cellulose wadding, expanded cork, perlite, expanded vermiculite, cellular glass, at least one insulating panel under vacuum, the at least one panel being formed of an aerogel enveloped in an impervious film under vacuum, wherein the aerogel could be of the "nanostructured silica" type.

4. Tank according to any one of claims 1 to 3, **characterised in that** the first layer (13) has a thickness comprised between 0.1mm and 1mm, the second layer (23) has a thickness comprised between two and eight millimetres, the third layer (33) has a thickness comprised between twenty and sixty millimetres, the fourth layer (43) has a thickness comprised between two and eight millimetres.

5. Tank according to any one of claims 1 to 4, **characterised in that** the inner wall (2) comprises a multilayer structure comprising, from the inside of the tank (1) to the outside of the tank (1): a first impervious layer (12) comprising a thickness of plastics material, a second reinforcement layer (22) of carbon fibres and/or glass fibres immersed in resin, the first layer (12) of the inner wall (2) having a thickness comprised between 0.5mm and 5mm.

6. Tank according to any one of claims 1 to 4, **characterised in that** the inner wall (2) comprises a multilayer structure comprising, from the inside of the tank (1) to the outside of the tank (1): a first impervious layer (12) comprising a thickness of aluminium, a second reinforcement layer (22) of carbon fibres and/or glass fibres immersed in resin.

7. Tank according to claim 5 or 6, **characterised in that** the inner wall (2) comprises a third layer (33) arranged on the second layer (22), on the outer side of the tank (1), the third layer (33) comprising a metal layer such as a film or fabric covered with aluminium or metal.

8. Tank according to any one of claims 1 to 7, **characterised in that** the support feet (7) are arranged around the outer wall (3) and **in that** a filament winding is produced around the outer wall (3) equipped with support feet (7).

9. Tank according to any one of claims 1 to 8, **characterised in that** the tank (1) comprises, in the inner volume delimited by the inner wall (2), at least one partition (8) transverse to a longitudinal axis of the tank (1), the at least one partition (8) being perforated to both enable a liquid flow in the tank (1) along a direction parallel to the longitudinal axis and to form a baffle.

10. Tank according to claim 9, **characterised in that** the at least one transverse partition (8) is fixed on a tubular section (102) forming a central portion of the inner wall (2) of the tank (1).

11. Tank according to claim 9 or 10, **characterised in that** the at least one transverse partition (8) is mounted clamped between two tubular sections (102) assembled on one another to form a central portion of the inner wall (2) of the tank (1).

12. Tank according to claim 10 or 11, **characterised in that** the two ends of the central portion of the tank are closed up by bottom walls (202) fixed to the ends of the central portion of the inner wall (2) of the tank (1).

13. Tank according to any one of claims 9 to 12, **characterised in that** the inner wall (2) comprises at least one mechanical reinforcing element arranged on its outer surface at the level of the placement of the at least one transverse partition (8).

14. Tank according to claim 12, **characterised in that** a reinforcing fibre winding is wound over the central portion (102) and the bottom walls (202) assembled on the two ends of the central portion.
